# EUROPEAN PATENT APPLICATION

(11) **EP 0 624 851 A1**
(43) Date of publication of application: **17.11.1994**
(21) Application number: 93107810.9
(22) Date of filing: 13.05.1993
(51) Int. Cl.: G06K 1/00

(54) **Coupler between the applications on the card level and the applications on the system level**

(71) Applicant: Angewandte Digital Elektronik GmbH, 21521 Dassendorf (DE)
(72) Inventor: Kreft, Hans-Diedrich, W-2055 Dassendorf (DE)

(57) **Abstract**

In this paper it is described a hardware named RICH COUPLER which works between a card and its terminal-system. The function of a RICH COUPLER depends on its position which is shown by DRAWING. It is obvious between CARD LEVEL and SYSTEM LEVEL there is a third independent level, the COUPLER LEVEL. The CARD LEVEL and the SYSTEM LEVEL are involved in the specific card application. The COUPLER LEVEL is application independent. The goal of this patent is to describe a application independent RICH COUPLER which works like a supervisor between the applications on the CARD LEVEL and the applications on the SYSTEM LEVEL.

## Description

### Field of the invention:

This description of RICH relates to Integrated circuit(s) cards (IC-cards) and card terminals. IC-cards, terminals and communication standards between cards and terminals are described in the ISO 7816 for cards with contacts, in the ISO 10 536 for contactless cards and in the EN 726 for cards and terminals for telecommunication use.

It is possible to load into the memory of a IC-card data's for many different card applications (CA1, CA2, CA3 .. see RICH DRAWING 1,2) of different application providers (AP1, AP2, AP3..) like banks, dealer organisations, clubs, telephone companies, insurance companies, special service providers etc. Such cards are named multiapplication cards (MACs).

It is obvious that a MAC would open the chance to combine the benefits of many different application providers at one card. The combination of two application providers on a usual magnetic stripe card is usually named co-branding. There are many different co-branding cards in the today's market and in the pockets of the card holders.

The possibilities of a MAC exceeds the limits of a co-branding card extremely. That means there are uncountable possibilities of combining benefits of different application providers on one MAC. Because of this effect there would be established MAC-provider-pools. For example a phone company would combine its phone service opened by a IC-card with the benefits of a bank and opens the memory of the same card for a insurance company. A credit card organisation could combine its card with the benefits of a travel agency and add the benefits of a club to the card and further installs in the not complete filled memory the benefits of a retail and department store. For MAC-provider-pools the rule seems advantageous to start quick with market penetration and to save a great market share by issuing many cards in a short time to a great number of consumers. Because this rule is valid for all the different MAC-provider-pools it could be assumed that there spread out different MACs into the market.

For the card user this situation bears two troubles. If he decides for one card he has to do without the benefit of the other MAC. If he decides for the benefits of more than one card he has the troubles coming up by using many cards: he has different cards with different application and service benefits in his pockets. That means the advantages to hold only one MAC which serves for all the different benefits of cards is not reached.

A customer which has to decide between many different but narrowed MAC-services needs for god decision longer time. That means the total MAC market penetration needs a longer time. The return of investment for a card issuer is delayed. It is always known that a unique market is the best growing market. For example on of the most successful market penetration took place by the digital music disk. On of the main helpful effect was the international technical standard which leads to the effect of total compatible technique which leads to compatible disk players and last not least to the overwhelming success of this advetagoues technique. To make the international standards of IC-cards workable for MACs is the main goal of this description.

If a card holder can use his MAC only inside a MAC-provider-pool this MAC is hereby named a closed MAC (cMAC). A cMAC is characterised by the effect that it prefers card applications of the specific provider pool and exclude applications of other providers especially exclude competing MAC-solutions.

In opposition to the concept of cMAC is a MAC which is open to all the different applications of different providers. Such an open MAC is hereby named open MAC (oMAC).

An oMAC opens the card holder the possibility to prefer that application or that provider he like to use by his MAC. And therefor he needs only one oMAC in his pocket instead of different cards with different services.

With the international distribution of MACs comes up the requirement for a reference system which decides well or not a MAC or a MAC-terminal meets the standards and will communicate in a determined and foreseen manner. Especially oMACs need a reference to make sure that different applications of different providers work together without interfering the different data's stored in a MAC.

The goal of this paper is to describe a computer aided system which could be used to make sure that MACs communicate with terminals in a determined manner in relation to international and European standardisation.

### Background

The standardisation of IC-cards has led to many results which are described in the papers of the ISO/IEC/JTC1/SC17, the papers of the CEN/TC224 and the ETSI papers. There are some reasons why this papers could not guaranty that different issued MACs are could be used at a terminal in a foreseen manner or with a foreseen effect.

A first reason is that the papers describe in some cases optional solutions. That means there could be IC-cards issued to the user with different physical conditions or data structures. Because of the same reason there could be installed terminals with different protocol structures. The effect is that cards and terminals cannot work together in a determined manner.

A second reason for incompatibility is that there could come up some misinterpretation in reading ISO-papers. The misinterpretation leads to different hardware-layouts and different written programs on both levels CARD LEVEL and SYSTEM LEVEL.

A third possibility of incompatibility could be ISO-papers contain some inconsistencies. This inconsistencies lead to inconsistencies in the developed hard- and software. If the inconsistencies become obvious developers would look how they can circumvent this inconsistencies. It is obvious that in both cases inconsistencies lead to incompatibility.

In all the three mentioned cases the issuer of cards and/or terminals would insist that their products are ISO-compatible. In all the cases there is no reliability that the interaction between card and terminal would work in a determined process in relation to the intention of the ISO-standardisation.

In the case of incompatibility there is today no other reference than the descriptions of the ISO etc. itself. There is no reference-process or reference-system by which it could be decided in a determined objective manner well a card and/or terminal works compatible or not.

The described situation leads to the effect that the issued cards which are in the field are the test objects to new issued applications.

In this paper it is described a hardware named RICH COUPLER which works between a card and its terminal like a supervisor. The supervisor function of a RICH COUPLER depends on its position which is shown by RICH DRAWINGS 1,2,3,4. Base is the RICH DRAWING 1 which is the standard model of ISO-standardisation description. The assumption of international standardisation is: If on the side of the CARD there exist a standardisation and also on the side of the EXTERNAL WORLD than the both side would work faultless together.

By using RICH DRAWING 3 it is obvious that between CARD LEVEL and SYSTEM LEVEL there is a third independent level, the COUPLER LEVEL. The CARD LEVEL and the SYSTEM LEVEL are involved in the specific card application. The COUPLER LEVEL is application independent. It works like a supervisor to all the processes and interactions that took place on the COUPLER LEVEL.

The goal of this patent is to describe a application independent RICH COUPLER which works like a supervisor between the applications on the CARD LEVEL and the applications on the SYSTEM LEVEL.

### Description of the drawings.

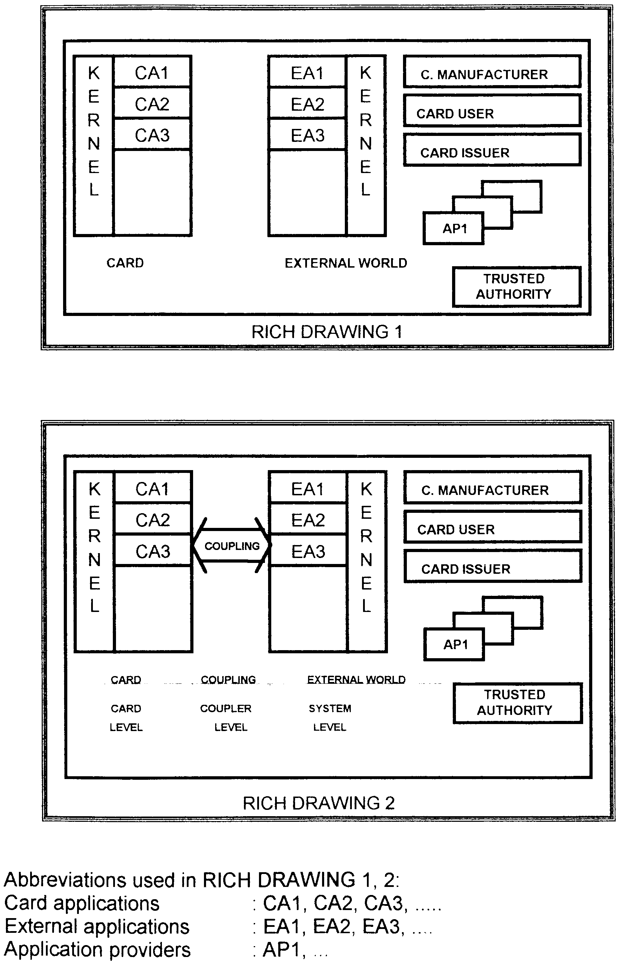

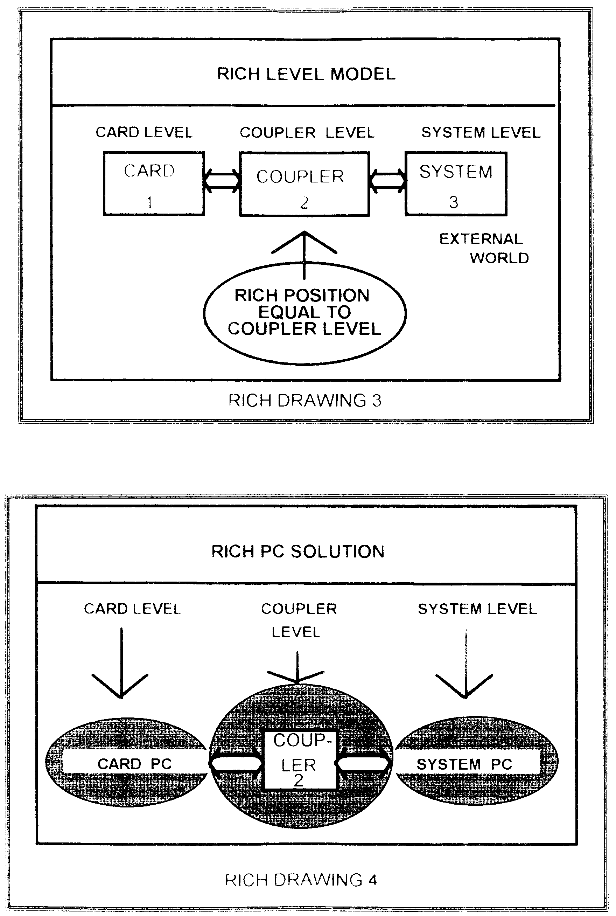

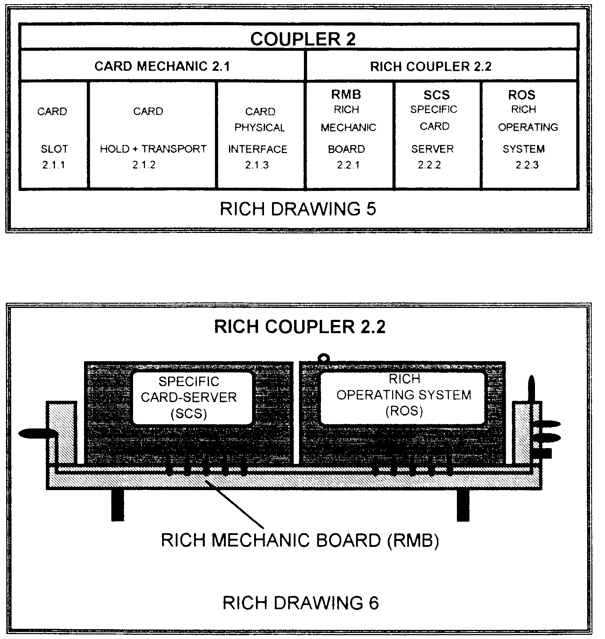

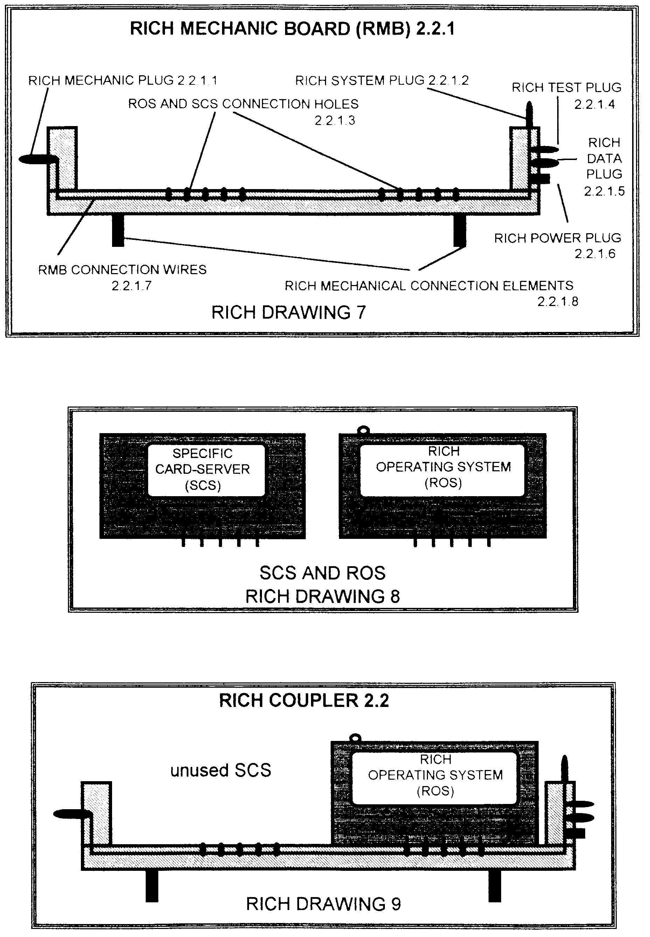

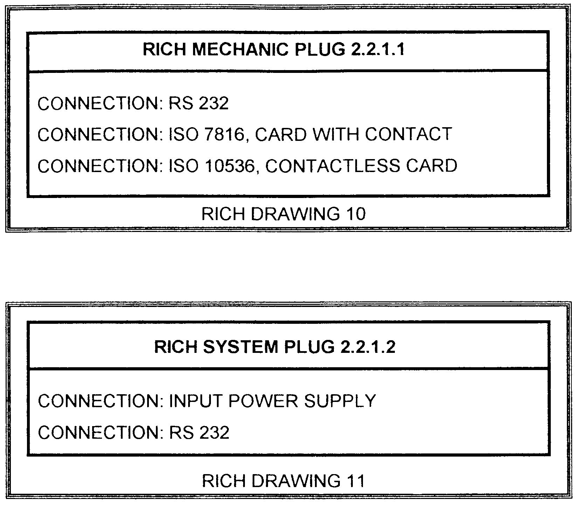

RICH DRAWING 1 is identical with figure 3 of the description EN 726-1 "Terminal Equipment (TE) Requirements for IC cards and terminals for telecommunication use Part 1 - System overview" item 5, General concepts. That figure 3 of EN 726-1 shows a reference model for a card system. This reference model distinguishes between the two separate parts, the CARD and the EXTERNAL WORLD.

The abbreviations are:
- Card applications: : CA1, CA2, CA3, .....
- External applications: : EA1, EA2, EA3, ....
- Application providers: : AP1, ...

It is obvious that there has to be a direct physical connection which could establish a bi-directional signal flow for communication use between the CARD at one side and the EXTERNAL WORLD at the other side.

The fundamental assumption of the different standardisation papers is that a description of the CARD at one side and a description of the EXTERNAL WORLD at the other side would determine compatibility between both sides. The remaining problem is to make sure that different CARDS and the EXTERNAL WORLD couple in a foreseen and standard conform manner.

RICH DRAWING 2 is identical to RICH DRAWING 1 completed by the word COUPLING and the symbol 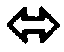 which symbolizes the direct physical connection which could establish a bi-directional signal flow for communication use between the CARD at one side and the EXTERNAL WORLD at the other side. It is further in this drawing shown that the three different words CARD, COUPLING and EXTERNAL WORLD are related to the CARD LEVEL, COUPLER LEVEL and SYSTEM LEVEL.

RICH DRAWING 3 is named RICH LEVEL MODEL. The RICH LEVEL MODEL shows the three elements CARD 1, COUPLER 2, SYSTEM 3. This three elements are assigned to three levels the CARD LEVEL, COUPLER LEVEL and SYSTEM LEVEL. It is by the symbols 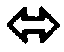 and their length clearly determined that they belong to the COUPLER LEVEL. It is by the DRAWING 4 further shown that the RICH POSITION is equal to the COUPLER LEVEL. It is further indicated that the EXTERNAL WORLD works on the SYSTEM LEVEL.

RICH DRAWING 4 is named RICH PC SOLUTION it shows one of the main goals of this description of RICH. At the CARD LEVEL a card could be substituted by a CARD-PC which simulates the CARD 1. At the SYSTEM LEVEL the EXTERNAL WORLD could be simulated by a SYSTEM-PC. If the CARD PC and the SYSTEM PC could interact in a determined and foreseen manner by using the COUPLER 2 than this COUPLER is a reference to right coupling and right interaction between CARD LEVEL and SYSTEM LEVEL. Such a coupling is named RICH COUPLING.

RICH DRAWING 5 is named COUPLER 2 and symbolizes the different parts of the COUPLER 2. The COUPLER 2 consists on the two main parts: CARD MECHANIC 2.1 and RICH COUPLER 2.2.

The first main part the CARD MECHANIC 2.1 consist of mechanical parts like a CARD SLOT 2.1.1, CARD HOLD + TRANSPORT 2.1.2 and CARD PHYSICAL INTERFACE 2.1.3. The CARD MECHANIC is not a goal of detailed description of RICH. It is mentioned for completion of the RICH description.

A CARD SLOT 2.1.1 is realised by a mechanical device in which a card could be inserted. The mechanical CARD HOLD + TRANSPORT 2.1.2 positions the card in a determined geometrical relation to the other parts of the CARD MECHANIC.

The CARD PHYSICAL INTERFACE 2.1.3 realises by physical elements like contacts, coils, capacitors the electrical and communication interaction to the real cards. A COUPLER which perform RICH-requirements distinguishes not between the different cards like cards with contacts and contactless cards. To RICH it is only necessary a CARD MECHANIC has to serve the electrical and communication interaction to the different types of cards.

The second main part the RICH COUPLER 2.2 consist of are the RICH MECHANIC BOARD (RMB) 2.2.1, the SPECIFIC CARD SERVER (SCS) 2.2.2 and the RICH OPERATING SYSTEM (ROS) 2.2.3. This three parts are the important parts of RICH and described in detail.

RICH DRAWING 6 is named RICH COUPLER 2.2 and shows a complete performance of a RICH COUPLER 2.2. with the three parts: RICH MECHANIC BOARD (RMB), SPECIFIC CARD SERVER (SCS) and the RICH OPERATING SYSTEM (ROS).

RICH DRAWING 7 is named RICH MECHANIC BOARD (RMB) 2.2.1 and shows in detail a mechanical performance of a RMB. The RMB is a mechanical part - like a printed wiring board - which is prepared by ROS AND SCS CONNECTION HOLES 2.2.1.3 for mounting the two electronic circuits SCS and ROS. Therefor the RMB contains prepared standardized connections which connect electrically the elements SCS and ROS and hold it mechanically. Inside the RMB there are the RICH MECHANIC PLUG 2.2.1.1, RICH SYSTEM PLUG 2.2.1.2, the ROS and SCS CONNECTION HOLES 2.2.1.3, RICH TEST PLUG 2.2.1.4, RICH DATA PLUG 2.2.1.5, RICH POWER PLUG 2.2.1.6, RMB CONNECTION WIRES 2.2.1.7 and the RICH MECHANICAL CONNECTION ELEMENTS 2.2.1.8.

The RMB CONNECTION WIRES 2.2.1.7 are electrical wires embedded in the material of the RMB and connect the different elements of the RMB electrically. The wire-connection is a predetermined network for all uses of a RMB and makes sure that the electrical and communication connections to the CARD LEVEL and the SYSTEM LEVEL are always determined.

The RICH MECHANICAL CONNECTION ELEMENTS 2.2.1.8 are prepared for the mounting of the RMB to an external mechanic device.

RICH DRAWING 8 shows the separated devices SCS and ROS which could be mounted at a RMD.

RICH DRAWING 9 shows a RICH COUPLER which consist only of the two parts RMB and ROS. This drawing symbolizes a RICH COUPLER with unused SCS is always a workable unit.

RICH DRAWING 10 collects the standardized connection elements of the RICH MECHANIC PLUG 2.2.1.1, the RS 232 serves for serial connection to the CARD LEVEL especially the CARD PC. The ISO 7816 for connection to a CARD MECHANIC that serves for cards with contacts and the ISO 10536 which serves for contactless cards. This RICH MECHANIC PLUG is a standardized element which is ready to connect directly to a standardized CARD PHYSICAL INTERFACE 2.1.3. on the side of the CARD MECHANIC 2.1. (See RICH DRAWING 5).

RICH DRAWING 11 collects the standardized elements of a RICH SYSTEM PLUG 2.2.1.2, the RS 232 serves for the connection to the RICH SYSTEM LEVEL especially the RICH SYSTEM PC 3.1.

Separated from the RS 232 the RICH COUPLER 2.2 has a power connection for getting power for its own requirements and to serve for a MECHANIC CARD SYSTEM.

### Description of the patent goals.

RICH DRAWINGS 1,2,3,4 make clear the COUPLING between the CARD (CARD LEVEL) and the EXTERNAL WORLD (SYSTEM LEVEL) could be solved by a special device named COUPLER working on the intermediate COUPLER LEVEL. This COUPLER contains all the requirements which are necessary for connection CARD LEVEL and SYSTEM LEVEL.

To understand the patent description it is useful to take a point of view in a position intermediate between CARD LEVEL and SYSTEM LEVEL (see RICH DRAWING 3). This intermediate point of view differs from the usual point of view a system developer prefers. The point of view of a system developer is usually inside his system that means inside the terminal.

It is obvious that there has to be a direct physical connection which could establish a bi-directional signal flow for communication use between the CARD and the EXTERNAL WORLD. In RICH DRAWING 2 is the symbol 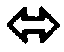 used to indicate that necessary connection. The ISO 7816 describes contacts positioned on the surface of a card and describes the electrical connection and the protocol for communication between CARD and EXTERNAL WORLD. Most of the toady's system developer use this description for their system layout. That means the ISO-card-description is used by device and system developer to determine their special device and system card interface. The effect is that a system or device developer prolongs the standardized ISO card contact requirements from the card level into the system level. The effect is that the exact timing of ground, power and clock connection to the different card contacts are prepared on the system level. Because of this same effect the clock frequency which is needed by the electronic in the card is provided on the system level. The physical connection of a contactless card are more subtle and should be described in the outstanding parts 3 of the ISO 10536. That means a system developer has to recognize more requirements for card connection.

The separation between the CARD and the EXTERNAL WORLD gives no hint which system CARD or EXTERNAL WORLD would test the proper workability of the other system. It leads to confusion if a terminal produces the decision well a card would work or not would word in relation to standards. The vice versa situation produces no better situation. In both cases the test device could bear the fault. That means the tested system has produced the right answer to the not sufficient working testing system.

This situation becomes more important if MACs are used. Because of the unforeseen many application a MAC can serve there would come up different new programs in the EXTERNAL WORLD. If there is no intermediate test between CARD and EXTERNAL WORLD than the CARDs in the field becoming the test criteria for the new applications and the programs.

On sufficient method to lead out of the above mentioned troubles is described in this paper and leads to use a intermediate hardware and software named COUPLER situated between CARD and EXTERNAL WORLD. This COUPLER could work like a filter between CARD and EXTERNAL WORLD and can produce tests for the CARD and the EXTERNAL WORLD.

### Problems which are solved by using RICH.

Testing the condition on the SYSTEM LEVEL side:
- testing the physical and logical consistencies of protocols which are coming in from the SYSTEM LEVEL
- sending test protocols to the SYSTEM LEVEL and controlling the feed back from the SYSTEM LEVEL
- simulation a CARD LEVEL for use on the SYSTEM LEVEL

Testing the condition on the CARD LEVEL side:
- testing the physical and logical consistencies of protocols which are coming in from the CARD LEVEL
- sending test protocols to the CARD LEVEL and controlling the feed back from the CARD LEVEL
- simulation of SYSTEM LEVEL for use on the CARD LEVEL
- providing power for the CARD LEVEL
- indication light for not suitable working of a system component.

### Explanation to the claim 1:

Claim 1 describes as the basic element the RICH COUPLER which is positioned between the CARD LEVEL and the SYSTEM LEVEL and is characterised by its function between this levels. A look to the RICH DRAWINGS 1,2,3,4 clears the working position of the RICH COUPLER. The SYSTEM LEVEL is in the ISO-papers usually named "terminal" or "external world" and sometimes it is used the word "system". Claim 1 clears what SYSTEM LEVEL in terms of RICH means: The CARD LEVEL independent device which is prepared to interact with CARDS. Sometimes the CARD LEVEL independent devices are devices like encipher-, fax- or cash-devices.

The three distinguishable parts of a COUPLER are the RICH MECHANIC BOARD (RMB), the RICH OPERATING SYSTEM (ROS) and the SPECIFIC CARD SERVER (SCS). RICH DRAWING 6 shows a simplified performance of this three devices. For working activities of a RICH COUPLER the RMB and the ROS are necessary devices. The SCS is an optional device which prepares for the special card applications. The RICH DRAWING 9 shows a RICH COUPLER which an unused SCS-connection.

RICH DRAWING 7 shows the six elements RICH MECHANIC PLUG 2.2.1.1, RICH SYSTEM PLUG 2.2.1.2, ROS AND SCS CONNECTION HOLES 2.2.1.3, RICH TEST PLUG 2.2.1.4, RICH DATA PLUG 2.2.1.5, RICH POWER PLUG 2.2.1.6.

The RICH MECHANIC PLUG 2.2.1.1 serves for the connection to the CARD LEVEL which is usually the CARD MECHANIC 2.1. The functions of a CARD MECHANIC 2.1 are shown in RICH DRAWING 5. The elements of a RICH MECHANIC PLUG are listed in RICH DRAWING 10. The RICH MECHANIC PLUG is a standardized element which serves CARDS with contacts as described in the ISO 7816 and CONTACTLESS CARDS as described in the ISO 10536. The RICH MECHANIC PLUG could be use some special connection-pins for special requirements like a card hold function for indicating the position of the card.

The RICH SYSTEM PLUG 2.2.1.2 serves for the connection to the SYSTEM LEVEL. The elements are listed in the RICH DRAWING 11.

The ROS AND SCS CONNECTION HOLES 2.2.1.3 are prepared holes into which the connection pins of the ROS and the SCS could be plugged in.

The RICH TEST PLUG 2.2.1.4 and the RICH DATA PLUG 2.2.1.5 are standardized serial RS 232 connections.

The RICH POWER PLUG 2.2.1.6 contains the INPUT POWER SUPPLY which is necessary for the working activities of the RICH COUPLER. It is obvious that the power must be sufficient also for CARD LEVEL requirements.

Inside the RICH MECHANIC BOARD there are embedded the RMB CONNECTION WIRES. This electrical wire network serves for the determined and right connection of the different parts of a RICH COUPLER. It is clearly described that the connection of the different part of a RICH COUPLER and especially between the CARD LEVEL and the SYSTEM LEVEL could only take place in that specific manner which is determined by the wired connection of the network. For example a SCS is connected by the RICH CONNECTION WIRES to the CARD LEVEL and/or the SYSTEM LEVEL. Because of this embedded hardwired connection the RICH COUPLER activities are controlled by the ROS.

### Explanations to the claim 2:

Claim 2 specifies the ROS which is determined in its activities by the RICH SOFTWARE (RSW). The open description of the RSW-operation allows it the different user of a ROS to prepare its own card application in harmonisation to the RSW. One special activity of the RSW is to simulate the card protocols and card-functions of the CARD LEVEL. That means a RSW simulates the requirements which are in the field prepared by a real working card. Because of this effect a ROS containing the RSW can work like a real working card that means it can be used like a reference to a SYSTEM LEVEL. Vice versa a ROS simulates the requirements which are in the field prepared by a real working SYSTEM. Because of this effect a ROS can be used as a reference (terminal reference) to a CARD LEVEL.

Because of this function of a RICH COUPLER it is useful to speak of a REFERENCE for CARD HARMONISATION. For example a card issuer can test the functions of his card by a RICH COUPLER which simulates the SYSTEM LEVEL. A device manufacturer can test the function of his terminal by a RICH COUPLER which simulates the CARD LEVEL. Cards or devices which tested independently by using a RICH COUPLER work together, they are RICH-compatible.

The ROS contains a function indication light or a display panel. This element allows to indicate the function status of a ROS without connected external PC.

A RICH COUPLER fits a card for the requirements of the SYSTEM LEVEL and fits a terminal for the requirements of the CARD LEVEL.

### Explanations to the claim 3:

To make sure that independent developed MAC-card-programs and independent developed MAC-terminals work faultless together it is necessary they use a harmonised MAC-command-set (MCCS). A RICH COUPLER contains a MCCS. This MCCS could be transmitted by standardized PC-connection to any PC by using a specific transmit command. The developer of a new card or terminal could use the MCCS for his development. The MCCS are coded on a higher level programming language for example in the programming language "C". Therefor it is clear that the developer could transcript the C-MCCS-Code into his specific processor code by using a compiler. Because of this transmission and transcription of MCCS-software it is secured that the right command set for MACs is spread out.

For example the specific command for deleting an application file on the MAC has the standardized name: "DELETE FILE" and is stored in MCCS. A RSW contains an executable object file of the command "DELETE FILE" which was in usual manner compiled, assembled and linked from a C-language-file. This file was completely stored in the MCCS and transmitted to the PC-connection by using a specific and open described RICH-command. The developer which tries to create a mask for his new MAC-controller can use the C-language-file of the command "DELETE FILE" and can build up his controller specific compiler, assembler, linker. It is obvious that by this method the right standardized MAC-commands penetrate the market in the same way the RICH-COUPLER will do.

Upgraded versions of MCCS could be market and it could be assured by the server of the "RICH-philosophy" that there is always the compatible MCCS-version in the market.

### Explanations to the claim 4:

It is obvious that a RSW which uses internally all the required instruction for MAC-use can analyse the incoming instructions from the SYSTEM LEVEL. Further it can produce a description of the differences between incoming and containing instructions.

### Explanations to the claim 5:

A ROS can be used like a command filter that transmit only that instructions between the CARD LEVEL and the SYSTEM LEVEL which fit the MCCS.

### Explanations to the claim 6:

A SCS prepares the real working card application. That means all the requirements of a specific card application are fulfilled by a SCS. For example a SCS fulfils all the requirements of a application provider which offers the card holder to store data's on the card. The identification of the memory location on the card needs a special application provider number in the SCS. A specific program in the SCS is need for the manipulation of the data's in the card like adding, booking etc. Because a ROS is an application independent system the SCS has to fulfil all the application specific requirements. Therefore the wired network of the RMB is prepared to connect the different part of the RICH COUPLER especially a SCS to connect it for transmitting bi-directional - in both directions - data's between SYSTEM LEVEL and CARD LEVEL. By an inplugged SCS with a specific card serving program a RICH COUPLER COULD be used like a terminal in the field. The SCS-software serves for the real multiapplication and the RSW works like a supervisor to the actions between CARD LEVEL and SYSTEM LEVEL.

A SCS contains specific security data's and processes like enciphering because data security and secured card handling is under application responsibility.

### Explanations to the claims 6,7:

It is obvious that a ROS because of its functions and hardware can be used to send test pattern to its usual outputs and can analyse the respond coming in.

## Claims

1. A device named RICH COUPLER which is characterisized by its physical and communication activities between CARD LEVEL and SYSTEM LEVEL, whereby CARD LEVEL is the standardized technical environment produced by an INTEGRATED CIRCUIT(S) (IC) CARD whereby SYSTEM LEVEL is the standardized technical environment produced by a CARD LEVEL independent device which is prepared to interact with the CARD LEVEL whereby said RICH COUPLER consist of a mechanical device the RICH MECHANIC BOARD (RMB), consist further of a first electronic circuit the RICH OPERATING SYSTEM (ROS) and a second electronic circuit the SPECIFIC CARD-SERVER (SCS) and whereby the RMB contains the six elements RICH MECHANIC PLUG, RICH SYSTEM PLUG, ROS AND SCS CONNECTION HOLES, RICH TEST PLUG, RICH DATA PLUG, RICH POWER PLUG which are by an electrically wire network, the RMB CONNECTION WIRES connected and the said ROS controls completely the logical communication activities in the network and between the CARD LEVEL and SYSTEM LEVEL.

2. A RICH OPERATING SYSTEM (ROS) according to claim 1 which operates on the base of a build-in and open described instruction set named RICH SOFTWARE (RSW) and which contains a set of standardized multiapplication-card-command-set (MCCS) and whereby the said RSW can simulate the card-protocols and card-functions of the CARD LEVEL for test requirements of the SYSTEM LEVEL and whereby said RSW simulates the system-protocols and system-functions of the SYSTEM LEVEL for test requirements of the CARD LEVEL in that manner that a ROS working RSW determined could be used as a reference to a well working real CARD LEVEL device like a CARD or a well working SYSTEM LEVEL device like a terminal whereby the said ROS contains a function indication light or a display panel to indicate the real working status and fault status of the ROS

3. A RICH COUPLER according to claim 1,2 prepared with a standardized connection for communication with a personal computer (PC) and whereby the said RICH COUPLER transmits by a specific RICH-command the stored set of standardized MAC-commands for MAC-activity and MAC-terminal and transmits the stored programs for executing the MAC-command-set in a high programming language to an external PC.

4. A ROS according to claim 1,2,3 which interprets and analyses the instructions coming in by protocol transmission from the SYSTEM LEVEL or the CARD LEVEL and whereby said RSW detects the differences to the MAC-COMMAND-SET and produces a description of the differences.

5. A ROS according to claim 1,2,3,4 which transmit only that instructions coming in from the SYSTEM LEVEL to the CARD LEVEL that fit all the requirements and standardisation aspects of the MCCS.

6. A RICH COUPLER according to claim 1 to which is added a SCS which is plugged into the SCS CONNECTION HOLES whereby the said SCS contains all the software requirements for the specific real working card applications especially fulfil all the application specific requirements of transmitting bi-directional data's between SYSTEM LEVEL and CARD LEVEL and whereby the said RMB wired connection network connects the ROS and the SCS and the other parts of the RMB which performs a RICH COUPLER to work like a real working terminal electronic to a card.

7. A ROS according to claim 3 which produces standardized protocol test pattern output and brings it to its usual RMB connection and analyses the feed back protocols coming in from that connection in respond to the produced output.

8. A ROS according to claim 4 which produces standardized MAC-commands as test instruction send to the output of its usual RMB connection and analyses the feed back protocols coming in in respond to the produced output.

## Amended claims

### Amended claims in accordance with Rule 86(2) EPC.

A device named RICH COUPLER which is characterisized by its physical and communication activities between CARD LEVEL and SYSTEM LEVEL, whereby CARD LEVEL is the standardized technical environment produced by an INTEGRATED CIRCUIT(S) (IC) CARD and whereby SYSTEM LEVEL is the standardized technical environment produced by a CARD LEVEL independent device which is prepared to interact with the CARD LEVEL, whereby the said RICH COUPLER consists of a mechanical device named the RICH MECHANIC BOARD (RMB), which consist further of a first electronic circuit named the RICH OPERATING SYSTEM (ROS) and a second electronic circuit named the SPECIFIC CARD-SERVER (SCS) and whereby the RMB contains the six elements RICH MECHANIC PLUG, RICH SYSTEM PLUG, ROS AND SCS CONNECTION HOLES, RICH TEST PLUG, RICH DATA PLUG, RICH POWER PLUG which are connected by an electrical wire network, the RMB CONNECTION WIRES, and the said ROS completly controls the logical communication activities both in the network and between the CARD LEVEL and the SYSTEM LEVEL.

A RICH OPERATING SYSTEM (ROS) according to claim 1 which operates on the basis of a built-in and open described instruction set named RICH SOFTWARE (RSW) and which contains a standardized set of multiapplication-card-command-set (MCCS) and whereby the said RSW can simulate the card-protocols and card-functions of the CARD LEVEL for test requirements of the SYSTEM LEVEL and whereby the said RSW simulates the system-protocols and system-functions of the SYSTEM LEVEL for test requirements of the CARD LEVEL in such a manner that a RSW-determined ROS could be used as a reference to a correctly working real CARD LEVEL device like a CARD or a correctly working SYSTEM LEVEL device like a terminal, whereby the said ROS contains a function indication light or a display panel to indicate the real working status and fault status of the ROS

A RICH COUPLER according to claim 1,2 equipped with a standardized connection for communication with a personal computer (PC) and whereby the said RICH COUPLER transmits by a specific RICH-command the stored set of standardized MAC-commands for MAC-activity and MAC-terminals and transmits the stored programs for executing the MAC-command-set in a high programming language to an external PC.

A ROS according to claim 1,2,3 which interprets and analyses the instructions coming in by protocol transmission from the SYSTEM LEVEL or the CARD LEVEL and whereby the said RSW detects the differences from the MAC-COMMAND-SET and produces a description of such differences.

A ROS according to claim 1,2,3,4 which transmits only those instructions coming in from the SYSTEM LEVEL to the CARD LEVEL that fit all the requirements and standardisation aspects of the MCCS.

A RICH COUPLER according to claim 1 to which is added a SCS which is plugged into the SCS CONNECTION HOLES, whereby the said SCS contains all the software requirements for the specific real working card applications especially those that fulfil all the application-specific requirements of transmitting bi-directional data between SYSTEM LEVEL and CARD LEVEL and whereby the said RMB wired connection network connects the ROS and the SCS and the other parts of the RMB in such a manner as to make the RICH COUPLER work like actual electronic terminal in conjunction with a card.

A ROS according to claim 3 which produces a standardized protocol test pattern output and brings it to its usual RMB connection and analyses the feed back protocols coming in from that connection in response to the produced output.

A ROS according to claim 4 which produces standardized MAC-commands as test instructions sent to the output of its usual RMB connection and analyses the feed back protocols coming in in response to the produced output.
